# EUROPEAN PATENT APPLICATION

(11) **EP 4 841 142 A1**
(43) Date of publication of application: **18.11.2026**
(21) Application number: 26172752.3
(22) Date of filing: 16.04.2026
(51) Int. Cl.: F16K 31/04, F02D 9/10, F02D 11/10, F16K 1/22

(54) **VALVE FOR VEHICLE**

(30) Priority: 12.05.2025 KR 20250061053
(71) Applicant: Kamtec, Inc., Chungcheongbuk-do 27818 (KR)
(72) Inventor: RYU, Dong Han, 18462 Hwaseong-si, Gyeonggi-do (KR); KIM, Se Bum, 18462 Hwaseong-si, Gyeonggi-do (KR); SON, Jong Wan, 18462 Hwaseong-si, Gyeonggi-do (KR); PARK, Seong Hyun, 18462 Hwaseong-si, Gyeonggi-do (KR)
(74) Representative: Jung, Minkyu

(57) **Abstract**

The present invention relates to a valve for a vehicle. The valve includes: a housing unit having a motor installation groove and an air inlet portion; a motor unit received in the motor installation groove; a flap rotatably mounted in the air inlet portion and configured to adjust an amount of air introduced into an engine by opening and closing an air inlet path; a power transmission unit configured to transmit power of the motor unit to the flap; a fixing plate unit coupled to the housing unit and having a through-hole through which the motor unit passes, and a pressing portion protruding toward the motor unit to press one side of the motor unit; and an insulating member disposed in the motor installation groove and disposed between the other side of the motor unit and the housing unit to space the other side of the motor unit and the housing unit from each other, the insulating member being made of an insulating material.

## Description

### CROSS-REFERENCE TO RELATED APPLICATIONS

A claim for Paris Convention priority is made to Korean Patent Application No. 10-2025-0061053 filed on May 12, 2025, in the Korean Intellectual Property Office, the entire contents of which are hereby incorporated by reference.

### BACKGROUND OF THE INVENTION

### Field of the Invention

The present invention relates to a valve for a vehicle, and more particularly, to a valve for a vehicle capable of improving insulation performance between a terminal of a motor unit and a housing unit.

### Description of the Related Art

A valve for a vehicle includes a housing having an inlet and an outlet formed therein, a valve device for selectively opening and closing the inlet, and an actuator for inducing a reciprocating motion of the valve device. Such an actuator is disclosed in Korean Patent Publication No. 10-1225681 (January 23, 2013).

A power transmission device for transmitting power is provided between the valve device and the actuator, wherein the power transmission device includes a plurality of gear modules and a shaft, and the valve device is connected to the shaft.

A separate fixing plate for fixing a driving motor to a housing is provided. When the driving motor is not supported with an appropriate load by the fixing plate, there is a problem in that a positional deviation of a gear module coupled to a motor shaft occurs as the motor shaft moves due to a minute gap between the fixing plate and the driving motor.

. This induces errors during engagement between a pinion and a power transmission device, thereby generating backlash or frictional resistance, causing a decrease in the operability of the entire valve, and leading to noise problems.

When a brush-type driving motor is used for a long period of time, brush powder generated as brushes wear out adheres to a commutator. At this time, since the current flowing from the brushes to the commutator flows to a motor shaft through the brush powder adhered to the commutator, insulation between a terminal of the driving motor and a motor housing may be destroyed, leading to current leakage. Accordingly, a dark current is generated even when the vehicle is turned off, which causes a problem of shortening the lifespan of a battery or the like.

### SUMMARY OF THE INVENTION

A valve for a vehicle according to one aspect of the present invention includes: a housing unit having a motor installation groove and an air inlet; a motor unit accommodated in the motor installation groove; a flap rotatably mounted to the air inlet to control an amount of air introduced into an engine by opening and closing an air induction path; a power transmission unit for transmitting power of the motor unit to the flap; a fixing plate unit coupled to the housing unit and including a through-hole through which the motor unit passes, and a pressing portion protruding toward the motor unit to press one side of the motor unit; and an insulating member disposed in the motor installation groove and between the other side of the motor unit and the housing unit to space the other side of the motor unit from the housing unit, the insulating member being made of an insulating material.

The insulating member is disposed between the other side of the motor and a bottom surface of the motor installation groove of the housing to space the other side of the motor from the bottom surface of the motor installation groove.

The insulating member may be made of a material capable of elastic deformation such that one surface thereof is in close contact with the other side of the motor unit and the other surface thereof is in close contact with the housing unit.

The insulating member may be made of a material including a rubber material.

The motor shaft portion may be disposed to be spaced apart from an inner circumferential surface of the insulating member.

The motor shaft portion may be disposed to be spaced apart from a shaft insertion groove of the motor installation groove.

An inner circumferential surface of the insulating member may be disposed closer to the motor shaft portion than an inner circumferential surface of the shaft insertion groove.

The valve for a vehicle may further include an upper insulating member disposed between one side of the motor unit and the fixing plate unit to space the one side of the motor unit from the fixing plate unit, the upper insulating member being made of an insulating material.

A top portion of the pressing portion may be disposed between an inner circumferential surface and an outer circumferential surface of the upper insulating member, and may be disposed between the motor shaft portion and an outer edge portion of the motor unit.

The fixing plate unit may include: a plate having the through-hole through which the motor shaft portion of the motor unit passes and a terminal through-hole through which a terminal of the motor unit passes; a first support portion and a second support portion protruding outward from an outer circumferential surface of the plate and disposed to be in contact with a fixing groove of the motor installation groove; and a bent portion extending from the outer circumferential surface of the plate, bent downward, and inserted into a coupling groove formed in the motor unit.

### BRIEF DESCRIPTION OF THE DRAWINGS

The present invention will become more fully understood from the detailed description given below and the accompanying drawings, which are given by illustration only, and thus are not intended to limit the scope of the present invention, wherein:
FIG. 1 is a perspective view schematically illustrating components of a valve for a vehicle according to an embodiment of the present invention.
FIG. 2 is an exploded perspective view schematically illustrating components of a valve for a vehicle according to an embodiment of the present invention.
FIG. 3 is a front view schematically illustrating components of a valve for a vehicle according to an embodiment of the present invention.
FIGS. 4 and 5 are perspective views schematically illustrating a fixing plate unit according to an embodiment of the present invention.
FIG. 6 is a cross-sectional view schematically illustrating components of a valve for a vehicle according to an embodiment of the present invention.
FIG. 7 is an enlarged view of the vicinity of the fixing plate unit in FIG. 6.
FIG. 8 is an enlarged view of the vicinity of an insulating member in FIG. 6..
FIG. 9 is a perspective view schematically illustrating components of a valve for a vehicle according to another embodiment of the present invention.

### DETAILED DESCRIPTION OF THE PREFERRED EMBODIMENT

Description for the present invention will now be given in detail according to examples disclosed herein, with reference to the accompanying drawings.

For the sake of a brief description with reference to the drawings, the same or equivalent components may be provided with the same reference numbers, and description thereof will not be repeated. In the following, any conventional art which is well-known to one of ordinary skill in the relevant art has generally been omitted for the sake of brevity. The accompanying drawings are used to help easily understand various technical features and it should be understood that the examples presented herein are not limited by the accompanying drawings. As such, the present invention should be construed to extend to any alterations, equivalents, and substitutes in addition to those which are particularly set out in the accompanying drawings.

A singular representation may include a plural representation unless it represents a definitely different meaning from the context.

It will be understood that although the terms "first," "second," etc., may be used herein to describe various components, these components should not be limited by these terms. These terms are only used to distinguish one component from another component.

The term "and/or" includes any combination of a plurality of related listed items or any one of a plurality of related listed items.

It should be understood that when a component is referred to as being "connected to" or "coupled to" another component, this component may be directly connected to or coupled to another component, or any intervening components may be present between the components. In contrast, when a component is referred to as being "directly connected to" or "directly coupled to" another component, there are no intervening components present.

Terms such as "comprise", "include" or "have" are used herein and should be understood that they are intended to indicate an existence of several components, functions or steps, disclosed in the specification, and it is also understood that greater or fewer components, functions, or steps may likewise be utilized. Moreover, due to the same reasons, it is also understood that the present invention includes any combinations of features, numerals, steps, operations, components, parts and the like partially omitted from the related or involved features, numerals, steps, operations, components, and parts described using the aforementioned terms unless deviating from the intentions of the original disclosure.

Hereinafter, embodiments will now be described in detail with reference to the accompanying drawings, wherein identical or corresponding components, regardless of reference numerals, are assigned the same reference numerals and redundant descriptions thereof are omitted.

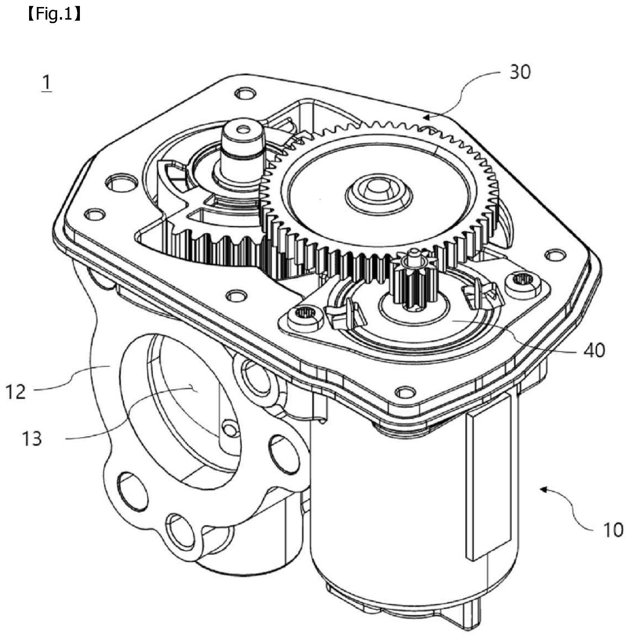

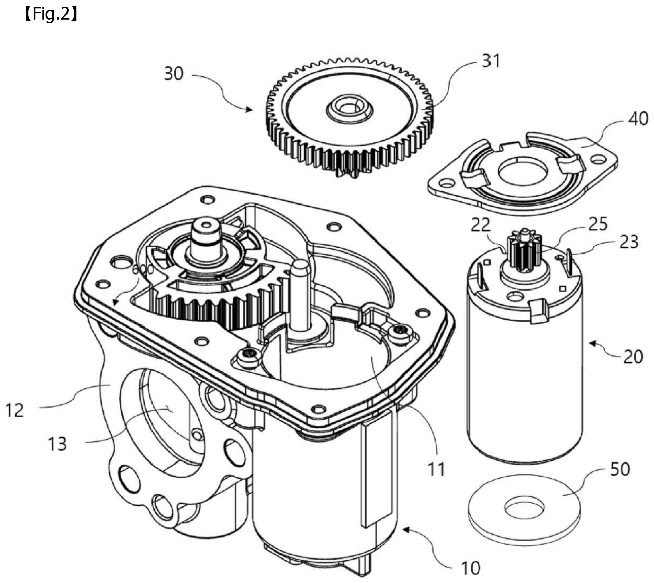

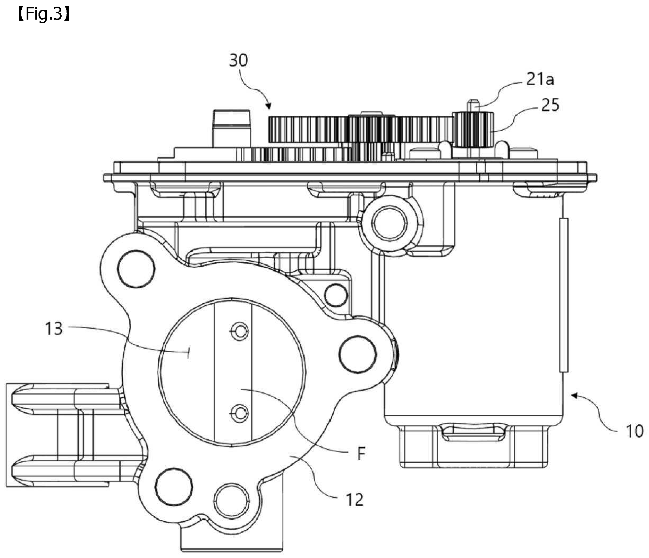

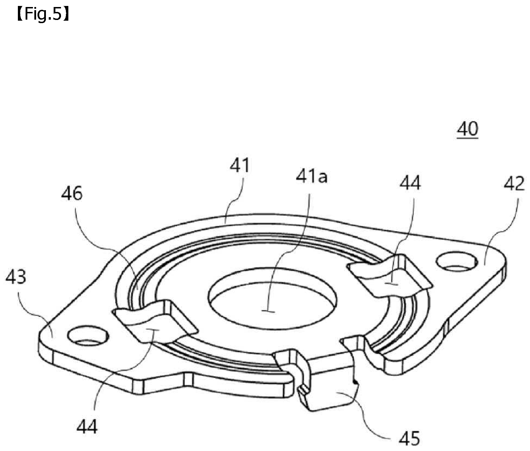

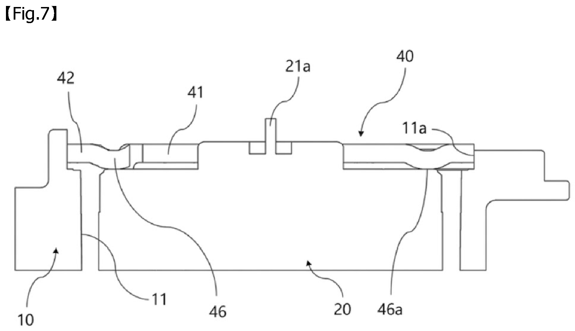

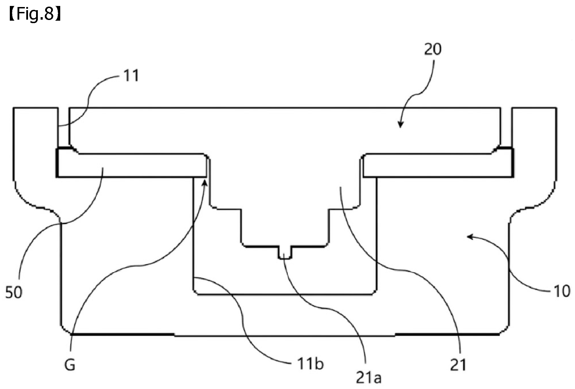

Referring to FIGS. 1 to 8, a valve for a vehicle 1 according to an embodiment of the present invention includes a housing unit 10, a motor unit 20, a flap F, a power transmission unit 30, a fixing plate unit 40, and an insulating member 50.

The housing unit 10 includes a motor installation groove 11 into which the motor unit 20 is inserted and mounted. The motor installation groove 11 may be formed to correspond to a shape and a size of the motor unit 20. The motor unit 20 may be mounted such that a center of a motor shaft 21a coincides with a center of the motor installation groove 11.

The housing unit 10 further includes an air inlet 12 defining an air induction path 13 therein. A flap F may be rotatably mounted to the air inlet 12. Since the air induction path 13 is opened or closed according to the rotation of the flap F, the flow of air through the air induction path 13 is allowed or blocked.

The motor installation groove 11 and the air inlet 12 may be disposed side by side in the housing unit 10. The housing unit 10 may be made of a material including a synthetic resin. A gear module 31, which is the power transmission unit 30, a cam (not shown), and the like may be rotatably mounted to the housing unit 10.

The motor unit 20 generates power and transmits the power to the power transmission unit 30. The motor unit 20 may be accommodated in the motor installation groove 11 and mounted to the housing unit 10. The power transmission unit 30 is power-connected to the motor unit 20 and transmits the power transmitted from the motor unit 20 to the flap F so that the flap F is opened and closed.

A housing cover (not shown) is disposed on one side (an upper side based on FIG. 1) of the housing unit 10 to which the power transmission unit 30 is mounted. The housing cover may be detachably coupled to the housing unit 10 by a fastening member.

Since the housing cover is coupled to the housing unit 10 in a state in which the motor unit 20 and the power transmission unit 30 are mounted to the housing unit 10, introduction of foreign substances or the like into the motor unit 20 and the power transmission unit 30 can be blocked, and damage to the motor unit 20 and the power transmission unit 30 from an external shock can be prevented.

A gasket may be installed between the housing unit 10 and the housing cover to be airtight. The gasket may be made of a rubber material and/or an elastically deformable material, and may be made of other materials that enhance airtightness.

The motor unit 20 may rotate a pinion 25 coupled to a motor shaft 21a in a forward or reverse direction at a desired angle by operation control of a control unit not shown, and may repeatedly perform rotation and stopping.

Rotational power provided from the motor unit 20 is generated at a predetermined reduction ratio by a gear module 31 gear-coupled to a pinion 25, a cam, and the like, and then transmitted to a flap F installed in the air inlet 12. The flap F may be adjusted in opening and closing, or a degree of opening thereof, by operation control of a control unit, thereby controlling the amount of air introduced into an engine.

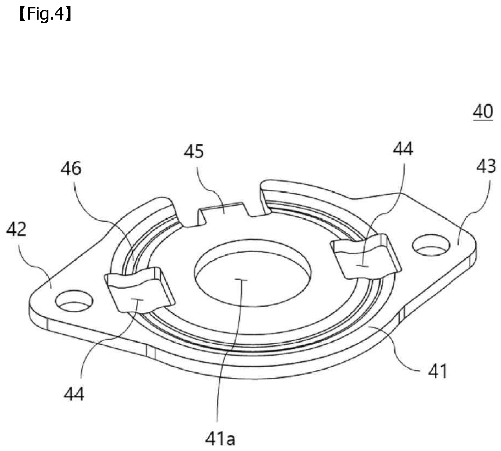

In a state in which the motor unit 20 is inserted and mounted in the motor installation groove 11 of the housing unit 10, the fixing plate unit 40 supports an opposing side (an upper side based on FIG. 4) of the motor unit 20 to prevent the motor unit 20 from being separated from the motor installation groove 11. The fixing plate unit 40 may press the motor unit 20 to further increase supporting force. Since the fixing plate unit 40 presses the motor unit 20 to suppress the motor unit 20 from moving on the housing unit 10, shock and noise caused by a collision between the motor unit 20 and the housing unit 10 can be reduced.

The fixing plate unit 40 may include a plate 41 made of a metal plate material having a predetermined thickness. The plate 41 may be formed by cutting and bending using a press die. A through-hole 41a may be provided in a central portion of the plate 41 such that an upwardly protruding portion of the motor unit 20, including a motor shaft 21a, passes therethrough.

The fixing plate unit 40 may include a first support portion 42 and a second support portion 43 protruding outward from an outer circumferential surface of the plate 41. The first support portion 42 and the second support portion 43 may be integrally formed with the plate 41. The first support portion 42 and the second support portion 43 may be disposed to be in contact with an inner wall of a fixing groove 11a concavely formed on one side of the housing 10.

The fixing groove 11a may be formed on an upper inner wall of the motor installation groove 11 in a shape corresponding to an outer shape of the fixing plate unit 40. The fixing groove 11a may be formed to be further concave in the motor installation groove 11 by a thickness of the fixing plate unit 40.

The first support portion 42 and the second support portion 43 may be detachably coupled to the housing unit 10 by a fastening member. The first support portion 42 and the second support portion 43 may each include a fastening hole through which the fastening member passes.

Since the first support portion 42 and the second support portion 43 are in contact with an inner wall of the fixing groove 11a, respectively, so as not to move on the fixing groove 11a and are fastened to the housing unit 10 by a fastening member, the fixing plate unit 40 can be firmly fixed in position to the housing unit 10. Accordingly, the fixing plate unit 40 can prevent the motor unit 20 from being separated from the housing unit 10 and can suppress the motor unit 20 from moving on the motor installation groove 11.

The fixing plate unit 40 may include a bent portion 45 bent downward (based on FIG. 4) from an outer circumferential surface of the plate 41. The bent portion 45 may be integrally formed with the plate 41 and positioned between the first support portion 42 and the second support portion 43.

The bent portion 45 may be inserted into a coupling groove 22 formed on one surface (an upper surface based on FIG. 1) of the motor unit 20. By the coupling of the bent portion 45 and the coupling groove 22, the fixing plate unit 40 and the motor unit 20 can maintain a coupled state, and an assembly position between each other can be accurately determined. When only one bent portion 45 is formed on the plate 41, the assembly position can be easily identified.

A terminal passage hole 44, through which a terminal 23 of the motor unit 20 can pass, is provided in the plate 41, so that the motor unit 20 and a power line outside the fixing plate unit 40 can be electrically connected.

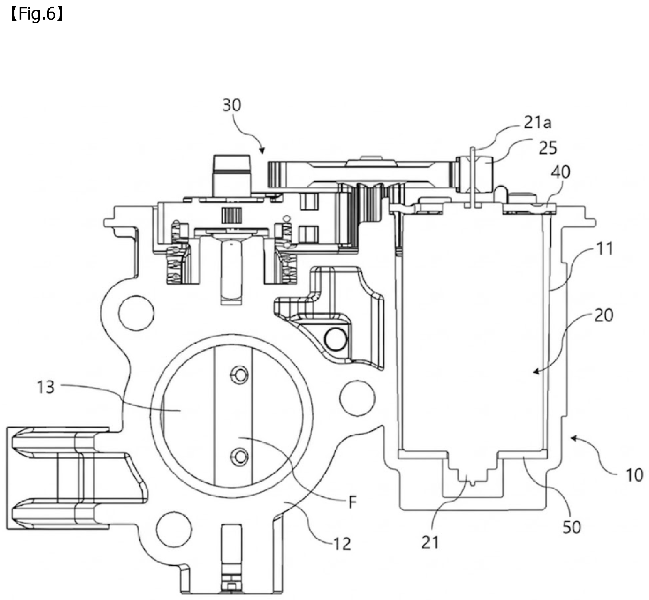

A pressing portion 46 may be provided on the plate 41. In a state in which the fixing plate unit 40 is coupled to the housing unit 10 by a fastening member and fixed in position, the pressing portion 46 may come into contact with one surface (an upper surface based on FIG. 6) of the motor unit 20 to press the motor unit 20.

The pressing portion 46 may be formed to protrude toward the motor unit 20 on one surface (a lower surface based on FIG. 6) of the plate 41 facing the motor unit 20. The pressing portion 46 may be continuously formed in a ring shape on one surface of the plate 41. Accordingly, the pressing portion 46 can uniformly provide pressing force to the motor unit 20 without being biased toward a specific point.

The pressing portion 46 may be concentric with the through-hole 41a along a circumference of the plate 41. Accordingly, the pressing portion 46 can provide pressing force to the motor unit 20 without being eccentric from a center of the motor unit 20.

A top portion 46a of the pressing portion 46 may form a flat surface so as to be in surface contact with the motor unit 20. The top portion 46a refers to a part that protrudes the most from the pressing portion 46. Accordingly, as a contact area between the pressing portion 46 and the motor unit 20 increases, a pressing force provided to the motor unit 20 can be further increased.

The fixing plate unit 40 may be made of a material including a bendable metal material. Accordingly, when the first support portion 42 and the second support portion 43 are strongly fastened to the housing unit 10 by a fastening member, the plate 41, which is a metal plate material, is bent, and thus the pressing portion 46 can press the motor unit 20 more strongly.

Through this, the motor unit 20 can be prevented from being separated from the housing unit 10, and the motor unit 20 can be further suppressed from moving on the motor installation groove 11.

Meanwhile, the pressing portion 46 may be formed at positions excluding the bent portion 45 and the terminal passage hole 44 already provided in the plate 41 when continuously formed along a circumference.

A protruding position of a top portion 46a of the pressing portion 46 is positioned between a motor shaft 21a of the motor unit 20 and an outer edge portion thereof. The protruding position of the top portion 46a of the pressing portion 46 may be disposed closer to the outer edge portion than to the motor shaft 21a.

A portion of the fixing groove 11a of the housing unit 10, where the first support portion 42 and the second support portion 43 are mounted, may be formed to be asymmetrical. Accordingly, during a mounting process, even if an operator inserts the first support portion 42 and the second support portion 43 in reverse, the operator can immediately recognize the fact. The first support portion 42 and the second support portion 43 may be formed to have asymmetrical shapes.

The insulating member 50 may be disposed in a shaft portion insertion groove 11b of the motor installation groove 11. The shaft portion insertion groove 11b is a portion formed to be more concave downward than other portions in the motor installation groove 11 so that the motor shaft portion 21 is inserted therein.

The insulating member 50 is made of an insulating material and is disposed between the other side (a lower side based on FIG. 6) of the motor unit 20 and an inner surface of the housing unit 10 to space the other side of the motor unit 20 and the inner surface of the housing unit 10 from each other. Accordingly, even if current flows through the other side of the motor unit 20, the current can be prevented from flowing to the housing unit 10.

In a brush-type motor unit 20, when used for a long period of time, brush powder generated as a brush is worn may adhere to a commutator, and due to this, current may flow to a motor shaft 21a through the brush powder adhered to the commutator. In the present embodiment, by spacing a motor shaft portion 21 having the motor shaft 21a and the housing unit 10 from each other, even if current flows to the motor shaft 21a, the current can be blocked from flowing to the housing unit 10.

The insulating member 50 may be formed in a ring shape to surround the motor shaft portion 21. Accordingly, the insulating member 50 can space the motor shaft portion 21 from the housing unit 10 in all directions of 360 degrees.

The insulating member 50 is disposed between the other side (a lower side) of the motor 20 and a bottom surface of the motor installation groove 11 of the housing 10 to serve as a spacer that spaces the other side of the motor 20 from the bottom surface of the motor installation groove 11, and is made of an insulating material to prevent energization or leakage of current between the motor 20 and the housing 10.

Meanwhile, the shape is not limited to a ring shape, and a simple plate shape other than a ring is also possible, and any configuration capable of serving as a spacer and providing insulation is possible.

The insulating member 50 may be made of a material capable of elastic deformation. Accordingly, the insulating member 50 disposed in the motor installation groove 11 is elastically deformed as the fixing plate unit 40 presses the motor unit 20, so that one surface thereof is in close contact with the other side of the motor unit 20 and the other surface thereof is in close contact with an inner surface of the housing unit 10. Accordingly, vertical and horizontal vibrations of the motor unit 20 within the housing unit 10 can be attenuated, and vertical and horizontal shocks can be absorbed.

The insulating member 50 may be made of a material including a rubber material. The insulating member 50 made of the rubber material can attenuate vertical vibration and absorb vertical shock by elastic deformation, and can attenuate horizontal vibration and absorb horizontal shock by a large friction coefficient of a rubber surface.

The motor shaft portion 21 may be disposed to be spaced apart from an inner circumferential surface of the insulating member 50. When the motor shaft portion 21 is inserted and mounted in the housing unit 10, concentricity with the motor installation groove 11 must be secured. Accordingly, when the motor shaft portion 21 is inserted and mounted in the housing unit 10, it is spaced apart from the insulating member 50 by a predetermined gap G or more, so that a position of the insulating member 50 can be prevented from affecting the securing of the concentricity of the motor shaft portion 21.

That is, the insulating member 50 is disposed to surround the motor shaft portion 21 so as not to affect the concentricity between the motor shaft portion 21 and the motor installation groove 11, but is disposed to have a sufficient gap G from the motor shaft portion 21.

The motor shaft portion 21 may be disposed to be spaced apart from the shaft portion insertion groove 11b of the motor installation groove 11. Accordingly, even if current flows through the motor shaft portion 21, since the motor shaft portion 21 is spaced apart from the shaft portion insertion groove 11b, the current can be blocked from flowing to the housing unit 10 through the shaft portion insertion groove 11b.

An inner circumferential surface of the insulating member 50 may be disposed closer to the motor shaft portion 21 than an inner circumferential surface of the shaft insertion groove 11b. Accordingly, even if the motor shaft portion 21 moves within the shaft insertion groove 11b, the insulating member 50 comes into contact with the motor shaft portion 21 before the shaft insertion groove 11b does, so that current can still be blocked from flowing to the housing unit 10 through the shaft portion insertion groove 11b.

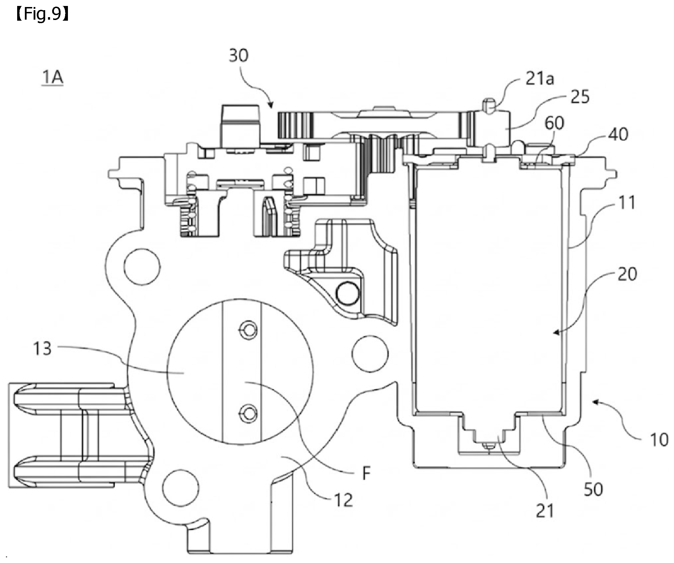

FIG. 9 is a perspective view schematically illustrating components of a valve for a vehicle according to another embodiment of the present invention.

Referring to FIGS. 1 to 9, a valve 1A for a vehicle according to another embodiment of the present invention includes a housing unit 10, a motor unit 20, a flap F, a power transmission unit 30, a fixing plate unit 40, an insulating member 50, and an upper insulating member 60.

A valve 1A for a vehicle according to another embodiment of the present invention is one in which an upper insulating member 60 is added to the valve 1 for a vehicle according to one embodiment of the present invention. Accordingly, descriptions of a housing unit 10, a motor unit 20, a flap F, a power transmission unit 30, a fixing plate unit 40, and an insulating member 50 having the same configuration, operation, and effect will be omitted, and only the upper insulating member 60 will be described below.

The upper insulating member 60 is made of an insulating material and is disposed between one side (an upper side based on FIG. 9) of the motor unit 20 and the fixing plate unit 40 to space the one side of the motor unit 20 and the fixing plate unit 40 from each other. Accordingly, even if current flows through the one side of the motor unit 20, the current can be prevented from flowing to the housing unit 10.

The motor unit 20 includes a motor body (not shown) and a motor end cap (not shown). When the motor end cap is made of a metal material like the motor body, an upper insulating member 60 is disposed between the motor end cap and the fixing plate unit 40, so that leakage of current through a side of the motor end cap can be blocked.

The upper insulating member 60 may be formed in a ring shape to surround the motor shaft portion 21. The upper insulating member 60 can space the motor end cap from the fixing plate unit 40. However, the upper insulating member 60 is not limited to a ring shape, and any shape is possible as long as it is a configuration capable of spacing the motor end cap from the fixing plate unit 40.

The upper insulating member 60 may be made of a material capable of elastic deformation. Accordingly, the upper insulating member 60 is elastically deformed as the fixing plate unit 40 presses the motor unit 20, so that one surface thereof is in close contact with one side of the motor unit 20 and the other surface thereof is in close contact with a lower surface of the fixing plate unit 40. Accordingly, vertical and horizontal vibrations of the motor unit 20 within the housing unit 10 can be attenuated, and vertical and horizontal shocks can be absorbed.

The upper insulating member 60 may be made of a material including a rubber material. The upper insulating member 60 made of the rubber material can attenuate vertical vibration and absorb vertical shock by elastic deformation, and can attenuate horizontal vibration and absorb horizontal shock by a large friction coefficient of a rubber surface.

A top portion 46a of the pressing portion 46 may be disposed between an inner circumferential surface and an outer circumferential surface of the upper insulating member 60. In addition, the top portion 46a of the pressing portion 46 may be disposed between the motor shaft portion 21 and an outer edge portion of the motor unit 20. Accordingly, insulation performance through the upper insulating member 60 and a flow prevention effect through the pressing portion 46 can be maximized.

As described above, according to the embodiment of the present invention, insulation performance between a terminal 23 of the motor unit 20 and the housing unit 10 can be maintained even after a valve 1 for a vehicle is used for a long period of time.

As a result, even after a valve 1 for a vehicle is used for a long period of time, occurrence of leakage current between a terminal 23 of the motor unit 20 and the housing unit 10 can be blocked, and occurrence of dark current can be prevented while a vehicle is in a state where an engine is turned off, thereby extending a lifespan of a battery or the like. In addition, since the occurrence of leakage current between the terminal 23 of the motor unit 20 and the housing unit 10 can be similarly blocked even after an endurance test, customer safety can be promoted and quality satisfaction can be improved.

Although a number of examples have been described, it should be understood that other modifications and implementations can be devised by those skilled in the art that will fall within the spirit and scope of the principles of the present invention. More particularly, various variations and modifications in the structure or the configuration are possible within the scope of the disclosure, the drawings, and the appended claims. In addition to variations and modifications in the configuration, alternative uses will also be apparent to those skilled in the art.

## Claims

1. A valve for a vehicle, comprising:
a housing unit having a motor installation groove and an air inlet portion;
a motor unit received in the motor installation groove;
a flap rotatably mounted in the air inlet portion and configured to adjust an amount of air introduced into an engine by opening and closing an air inlet path;
a power transmission unit configured to transmit power of the motor unit to the flap;
a fixing plate unit coupled to the housing unit and having a through-hole through which the motor unit passes, and a pressing portion protruding toward the motor unit to press one side of the motor unit; and
an insulating member disposed in the motor installation groove and disposed between the other side of the motor unit and the housing unit to space the other side of the motor unit and the housing unit from each other, the insulating member being made of an insulating material.

2. The valve for a vehicle according to claim 1,
wherein the insulating member is disposed between the other side of the motor and a bottom surface of the motor installation groove of the housing to space the other side of the motor from the bottom surface of the motor installation groove.

3. The valve for a vehicle according to claim 1 or 2,
wherein the insulating member is made of a material capable of elastic deformation such that one surface of the insulating member is in close contact with the other side of the motor unit and the other surface thereof is in close contact with the housing unit.

4. The valve for a vehicle according to any one of claims 1 to 3,
wherein the insulating member is made of a material including a rubber material.

5. The valve for a vehicle according to any one of claims 1 to 4,
wherein a motor shaft portion is disposed to be spaced apart from an inner circumferential surface of the insulating member.

6. The valve for a vehicle according to any one of claims 1 to 4,
wherein a motor shaft portion is disposed to be spaced apart from a shaft insertion groove of the motor installation groove.

7. The valve for a vehicle according to claim 5 or 6,
wherein the inner circumferential surface of the insulating member is disposed closer to the motor shaft portion than an inner circumferential surface of the shaft insertion groove.

8. The valve for a vehicle according to any one of claims 1 to 7,
further comprising an upper insulating member disposed between one side of the motor unit and the fixing plate unit to space the one side of the motor unit and the fixing plate unit from each other, the upper insulating member being made of an insulating material.

9. The valve for a vehicle according to claim 8,
wherein a top portion of the pressing portion is disposed between an inner circumferential surface and an outer circumferential surface of the upper insulating member, and is disposed between the motor shaft portion and an outer edge portion of the motor unit.

10. The valve for a vehicle according to any one of claims 1 to 9,
wherein the fixing plate unit comprises:
a plate in which the through-hole through which the motor shaft portion of the motor unit passes is formed, and a terminal through-hole through which a terminal of the motor unit passes is provided;
a first support portion and a second support portion protruding outward from an outer circumferential surface of the plate and disposed to be in contact with a fixing groove of the motor installation groove; and
a bent portion extending from the outer circumferential surface of the plate, being bent downward, and being fitted into a coupling groove formed in the motor unit.
